# EUROPEAN PATENT APPLICATION

(11) **EP 4 141 894 A1**
(43) Date of publication of application: **01.03.2023**
(21) Application number: 22168011.9
(22) Date of filing: 12.04.2022
(51) Int. Cl.: H01B 13/26, H01B 7/282

(54) **RADIALLY AND LONGITUDINALLY CONDUCTIVE WATER BARRIER ASSEMBLY**

(30) Priority: 25.08.2021 EP 21306145
(71) Applicant: Nexans, 92400 Courbevoie (FR)
(72) Inventor: MAURI, Massimiliano, 1739 Borhenhaugen (NO); JORGENSEN, Simon, 1655 Sellebakk (NO)
(74) Representative: Ipsilon

(57) **Abstract**

A method of applying a non-lead sheathed radially and longitudinally conductive water barrier to a high voltage cable; a non-lead sheathed radially and longitudinally conductive water barrier and a laminate tape.

## Description

### Objective of the invention

The main objective of the invention is to provide a stable, laminate-structured, lightweight, lead-free metallic tape for use as a water barrier in subsea cables.

### Background

The current carrying parts of power cables may need to be kept dry. Intrusion of humidity or water may cause electrical breakdown of the power cable insulation system. The core section of power cables is therefore usually protected by a water barrier arranged circumferentially around the cable core. Up to date, the dominating material in water barriers for power cables is lead since lead has proven to be a reliable and sturdy sheathing material.

Several solutions for lead-based insulation system for providing water barriers to submarine power cables are known, but all have various disadvantages that should be overcome. One drawback is that lead is a high-density materiel adding significant weight to the cable. The heavy weight induces extra costs in the entire value chain from production, under transport, storage, deployment, and when the cable is discarded after reaching its lifetime. Another drawback is that lead has a relatively low fatigue resistance making leaden water barriers not suited for dynamical power cables. Furthermore, lead is a rather poisonous material increasingly meeting environmental regulation restrictions. An environmentally friendly replacement of lead as water barrier in power cables is required.

One alternative to lead-based water barrier are laminate structures combining metallic and polymer layers. However, these cables are often not fully impervious to water or degrade over time.

For example, US3551586 discloses a metallic tape, the tape having a release agent material applied selectively in at least one longitudinal strip on one major surface. The tape is then coated over the strip and both major surfaces with an adhesive material. The tape is wrapped longitudinally about a cable core, with the one major surface facing the core, to form an overlapped seam which is then heated to bond the adhesive on the one major surface to the adhesive on the other major surface. The strip of release agent material may be easily removed together with the overlying adhesive to bare the metal to facilitate grounding at a splice location. Several solutions for laminate metallic structures are known for use as water barriers as a replacement to lead-based insulation system for providing water barriers to submarine power cables, but all have various disadvantages that should be overcome. One such disadvantage is that these structures may result in a non-fully impervious water barrier. Another disadvantage is that the laminate structure may degrade in salt water and/or hot water conditions over time. One objective of this invention is to overcome the drawbacks of the known technology.

### Summary of the invention

The present invention is defined by the appended claims and in the following:
In a first aspect, the invention relates to a laminate tape for use in the production of water barriers, comprising
- a first layer made of an adhesive polymer material, and
- a metallic second layer
wherein the tape comprises a plurality of apertures.

In an embodiment of the laminate tape according to the first aspect of the invention, the apertures may extend through the first and second layers.

In another embodiment, the laminate tape may comprise a continuous and straight band without apertures, the band extending in the longitudinal direction of the tape.

In another embodiment, the apertures may be holes or slits.

In another embodiment, the surface of the plurality of apertures corresponds to between 5% and 50%, between 10% and 40%, between 10% and 30% or between 10% and 20% of the total surface area of the tape.

In another embodiment, the laminate tape may comprise a third layer made of an adhesive polymer material on the side of the metallic second layer opposite to the first layer made of an adhesive polymer material.

In another embodiment, the polymer adhesive of the first and/or third layer may comprise at least one polymer selected from the group comprising a low density polyethylene (LDPE), a linear low density polyethylene (LLDPE), a medium density polyethylene (MDPE), a high density polyethylene (HDPE) and a copolymer of ethylene with one or more polar monomers such as acrylic acid, methacrylic acid, glycidyl methacrylate, maleic acid, or maleic anhydride.

In another embodiment, the metallic second layer may be made of any metal/metal alloy at any thickness known to be suited for use in water barriers in power cables by the skilled person. In one example embodiment, the metallic second layer is a Cu/Cu-alloy such as for example pure Cu, a CuNi-alloy or a CuNiSi-alloy, or a Fe/Fe-alloy, such for example stainless alloy SS316 or S32750, or an Al/Al-alloy such as for example an AA1xxx series, an AA5xxx series or an AA6xxx series alloy according to the Aluminium Association Standard.

In one embodiment, the metallic second layer may be made of an alpha Ti based material, a near alpha Ti based material or an alpha-beta Ti based material.

In one embodiment the alpha Ti based material is selected from
- a pure Ti material that has a Ti content of at least 98.5% by weight, a Fe content from 0 to 0.5% by weight, O content from 0 to 0.5% by weight and a content of incidental elements and impurities from 0 to 0.5% by weight based on the total weight of the pure Ti material, and wherein the content of Ti, Fe, O and incidental elements and impurities sum up to 100 % by weight;
- a Ti alloy that has a Ti content from 95% to 98% by weight, a Cu content from 2% to 4% by weight and a content of incidental elements and impurities 0 to 1% by weight based on the total weight of the Ti alloy, and wherein the content of Ti, Cu and incidental elements and impurities sum up to 100 % by weight.
- a Ti alloy that has a Ti content of from 89% to 94% by weight, a Al content from 4% to 6% by weight, a Sn content from 2% to 4% by weight and a content of incidental elements and impurities from 0 to 1% by weight based on the total weight of the Ti alloy, and wherein the content of Ti, Al, Sn and incidental elements and impurities sum up to 100 % by weight.

In one embodiment the near alpha Ti based material is selected from
- a Ti alloy that has a Ti content from 87% to 91% by weight, a Al content from 7% to 9% by weight, a Mo content from 0.5% to 2% by weight, a V content from 0.5% to 2% by weight and a content of incidental elements and impurities from 0 to 1% by weight based on the total weight of the Ti alloy, and wherein the content of Ti, Al, Mo, V and incidental elements and impurities sum up to 100 % by weight;
- a Ti alloy that has a Ti content from 86% to 92.5% by weight, a Al content from 5% to 7% by weight, a Mo content from 0.4% to 2% by weight, a Nb content from 1% to 3% by weight, a Ta content from 0.1% to 2% by weight and a content of incidental elements and impurities from 0 to 1% by weight based on the total weight of the Ti alloy, and wherein the content of Ti, Al, Mo, V and incidental elements and impurities sum up to 100 % by weight;
- a Ti alloy that has a Ti content from 89% to 91.9% by weight, a Al content from 5% to 7% by weight, a Mo content from 3% to 5% by weight, a Sn content from 1% to 3% by weight, a Si content from 0.1% to 2% by weight and a content of incidental elements and impurities from 0 to 1% by weight based on the total weight of the Ti alloy, and wherein the content of Ti, Al, Mo, Sn, Si and incidental elements and impurities sum up to 100 % by weight;
- a Ti alloy that has a Ti content from 82% to 89% by weight, a Al content from 5% to 7% by weight, a Mo content from 1% to 3% by weight, a Sn content from 1% to 3% by weight, a Zr content from 3% to 5% by weight and a content of incidental elements and impurities from 0 to 1% by weight based on the total weight of the Ti alloy, and wherein the content of Ti, Al, Mo, Sn, Zr and incidental elements and impurities sum up to 100 % by weight; and
- a Ti alloy that has a Ti content from 83% to 88.9% by weight, a Al content from 3% to 5% by weight, a Mo content from 3% to 5% by weight, a Zr content from 4% to 6% by weight, a Si content from 0.1% to 1% by weight and a content of incidental elements and impurities from 0 to 1% by weight based on the total weight of the Ti alloy, and wherein the content of Ti, Al, Mo, Zr, Si and incidental elements and impurities sum up to 100 % by weight.
- a Ti alloy that has a Ti content from 80.5% to 87.5% by weight, a Al content from 5% to 7% by weight, a Mo content from 0.1% to 1% by weight, a Nb content from 0.3% to 1% by weight, a Sn content from 3% to 5% by weight, a Zr content from 3% to 5% by weight, a Si content from 0.1% to 0.5% by weight and a content of incidental elements and impurities from 0 to 1% by weight based on the total weight of the Ti alloy, and wherein the content of Ti, Al, Mo, Nb, Sn, Zr, Si and incidental elements and impurities sum up to 100 % by weight.

In one embodiment the alpha-beta Ti based material is selected from a Ti alloy that has a Ti content from 87% to 92% by weight, a Al content from 5% to 7% by weight, a V content from 3% to 5% by weight and a content of incidental elements and impurities from 0 to 1% by weight based on the total weight of the Ti alloy, and wherein the Ti content, Al content, V content and content of incidental elements and impurities sum up to 100 % by weight.

In one embodiment, the metallic second layer may be made of commercially pure Sn, Sn-Cu or Sn-Sb.

In one embodiment, the metallic second layer is selected from
- **commercially pure Sn** material that has a Sn content of at least 99.5 % by weight and a content of incidental elements and impurities from 0 to 0.5% by weight based on the total weight of the pure Sn material, and wherein the content of Sn and incidental elements and impurities sum up to 100 % by weight;
- **a Sn alloy** that has a Sn content from 97% - 99.5% by weight, a Cu content from 0.5% to 2% by weight and a content of incidental elements and impurities of 0 to 1% by weight based on the total weight of the Sn alloy, and wherein the content of Sn, Cu and incidental elements and impurities sum up to 100 % by weight; and
- **a Sn alloy** that has a Sn content from 93% - 96% by weight, a Sb content from 4% to 6% by weight and a content of incidental elements and impurities of 0 to 1% by weight based on the total weight of the Sn alloy, and wherein the content of Sn, Cu and incidental elements and impurities sum up to 100 % by weight.

In another embodiment, the metallic second layer may be lead-free.

In a second aspect, the invention relates to a method of applying a water barrier to a high voltage cable, comprising the steps of
a) providing a high voltage cable, comprising a conductor and an insulation system;
b) helically wrapping a first metallic tape around the cable forming a first barrier layer with an outer surface, so that the first metallic tape
substantially covers the outer surface of the cable and forms a helical tape transition section;

The helical tape transition section is intended to mean the helical section comprising the adjacent edges between adjacent turns of the tape helically wrapped around a cable.

The method further comprises the step:
c) helically wrapping a laminate tape around the first barrier layer forming an assembly, the laminate tape comprising:
- a layer made of a polymer adhesive, and
- a metallic layer;
wherein the layer made of a polymer adhesive is in contact with the outer surface of the first barrier layer,
wherein the laminate tape fully covers the helical tape transition section and leaves parts of the outer surface of the first barrier layer uncovered by the laminate tape;

In other words, the laminate tape fully covers any surface of the cable not covered by the first metallic tape.

The method further comprises the step:
d) heating the outer surfaces of the assembly obtained in step c) at a temperature over the melting temperature of the polymer adhesive layer, so that the polymer adhesive melts.

Here the person skilled in the art will understand that helically wrapping the tape around a cable means wrapping a tape (around a cable) in a manner wherein the wrapped tape is an helix, where the axis of the helix is the longitudinal axis of the cable.

A turn is a single complete (360°) turn of the tape around the axis of the helix

The pitch of a helix is the distance between any two points on the helix that are exactly one turn apart, measured parallel to the axis.

In an embodiment of the method, the pitch of the helix formed by the first metallic tape may be between 100% and 150% of the width of the first metallic tape. That is to say that two adjacent turns of the tape may be adjacent or that there may be a gap between the two adjacent turns of the first metallic tape of a size up to 50% of the width of the first metallic tape.

In another embodiment, the pitch of the helix formed by the first metallic tape may be between 100% and 140%, between 100% and 130%, between 100% and 120%, between 100% and 110%, or between 100% and 105% of the width of the first metallic tape.

Preferably there is no overlap between two adjacent turns of the first metallic cable.

In an embodiment of the method, the pitch of the helix formed by the first metallic tape may be equal to the width of the first metallic tape. That is to say that there is neither a gap nor an overlap between two adjacent turns of the first metallic tape.

In another embodiment, the first metallic tape may be made of a Cu/Cu-alloy such as for example pure Cu, a CuNi-alloy or a CuNiSi-alloy, or a Fe/Fe-alloy, such for example stainless alloy SS316 or S32750, or an Al/Al-alloy such as for example an AA1xxx series, an AA5xxx series or an AA6xxx series alloy according to the Aluminium Association Standard.

In one embodiment, the first metallic tape may be made of an alpha Ti based material, a near alpha Ti based material or an alpha-beta Ti based material.

In one embodiment, the first metallic tape may be made of commercially pure Sn, Sn-Cu or Sn-Sb.

In another embodiment, the first metallic tape may be lead-free.

In another embodiment of the method, the pitch of the helix formed by the laminate tape may be greater than the width of the laminate tape. That is to say, the helical tape transition section of the first metallic tape is still covered by the laminate tape, but some of the outer surface of the first metallic tape is uncovered or still apparent.

In an embodiment of the method, the pitch of the helix formed by the laminate tape may be between 100% and 150% of the width of the laminate tape. That is to say that two adjacent turns of the tape may be adjacent or that there may be a gap between the two adjacent turns of the first metallic tape of a size up to 50% of the width of the first metallic tape.

In another embodiment, the pitch of the helix formed by the laminate tape may be between 105% and 140%, between 110% and 130%, between 110% and 120%, between 100% and 110%, between 100% and 105%, between 130% and 150% or between 140% and 150% of the width of the first metallic tape.

In another embodiment of the method, the laminate tape may comprise a plurality of apertures. That is to say, the helical tape transition section of the first metallic tape is still covered by the laminate tape, but some of the outer surface of the first metallic tape, at least at the apertures, is uncovered or still apparent.

In another embodiment of the method, the laminate tape may be any one of the embodiments of laminate tape according to the first aspect of the invention.

In another embodiment of the method, the heating step d) may be realised before or through the following the step of:
e) extruding a polyethylene sheath around the assembly at a temperature sufficient over the melting temperature of the polymer adhesive, so that the polymer adhesive melts.

In another embodiment of the method, the method may further comprise the step of f) cooling the cable obtained in step d) in a water bath.

In another embodiment of the method, the method may further comprise a step between steps c) and d) of wrapping a second metallic tape around the assembly of step c) so that the second metallic tape substantially covers the surface of the assembly of step c).

In another embodiment of the method, the laminate tape comprises a third layer made of an adhesive polymer material on the side of the metallic second layer opposite to the first layer made of an adhesive polymer material.

In another embodiment, the polymer adhesive of the first and/or third layer may comprise at least one polymer selected from the group comprising a low density polyethylene (LDPE), a linear low density polyethylene (LLDPE), a medium density polyethylene (MDPE), a high density polyethylene (HDPE) and a copolymer of ethylene with one or more polar monomers such as acrylic acid, methacrylic acid, glycidyl methacrylate, maleic acid, or maleic anhydride.

In another embodiment, the metallic second layer may be made of any metal/metal alloy at any thickness known to be suited for use in water barriers in power cables by the skilled person. In one example embodiment, the metallic second layer is a Cu/Cu-alloy such as for example pure Cu, a CuNi-alloy or a CuNiSi-alloy, or a Fe/Fe-alloy, such for example stainless alloy SS316 or S32750, or an Al/Al-alloy such as for example an AA1xxx series, an AA5xxx series or an AA6xxx series alloy according to the Aluminium Association Standard

In one embodiment, the metallic second layer may be made of an alpha Ti based material, a near alpha Ti based material or an alpha-beta Ti based material.

In one embodiment, the metallic second layer may be made of commercially pure Sn, Sn-Cu or Sn-Sb.

In another embodiment of the method, the metallic second layer of the laminate tape may be lead-free.

In another embodiment, the second metallic tape may be made of any metal/metal alloy at any thickness known to be suited for use in water barriers in power cables by the skilled person. In one example embodiment, the second metallic tape is either a Cu/Cu-alloy such as for example pure Cu, a CuNi-alloy or a CuNiSi-alloy, or a Fe/Fe-alloy, such for example stainless alloy SS316 or S32750, or an Al/Al-alloy such as for example an AA1xxx series, an AA5xxx series or an AA6xxx series alloy according to the Aluminium Association Standard.

In one embodiment, the second metallic tape may be made of an alpha Ti based material, a near alpha Ti based material or an alpha-beta Ti based material.

In one embodiment, the second metallic tape may be made of commercially pure Sn, Sn-Cu or Sn-Sb.

In another embodiment, the second metallic tape may be lead-free.

In a third aspect, the invention relates to a water barrier comprising:
- an inner metallic first layer
- a second layer made of an adhesive polymer material
- a metallic third layer
wherein the second and third layers each have at least one aperture, the apertures of the second and third layer being co-located with each other; and wherein the second layer glues and seals the first layer to the third layer; and
wherein the water barrier forms a continuous barrier.

The presence the co-located at least one aperture in the second and third layers provides radial conductivity of the water barrier according to the third aspect of the invention.

In one embodiment of the water barrier, the water barrier is prepared through the method according to the second aspect of the invention.

Here it is worth noting that when the water barrier is prepared through the method according to the second aspect of the invention, the at least one aperture of the second and third layer (of the third aspect) correspond to the plurality of apertures of the laminate tape and/or to the gap between two turns of the laminate tape (of the second aspect).

In an embodiment of the water barrier, the metallic first layer may be made of any metal/metal alloy at any thickness known to be suited for use in water barriers in power cables by the skilled person. In one example embodiment, the metallic first layer is either a Cu/Cu-alloy such as for example pure Cu, a CuNi-alloy or a CuNiSi-alloy, or a Fe/Fe-alloy, such for example stainless alloy SS316 or S32750, or an Al/Al-alloy such as for example an AA1xxx series, an AA5xxx series or an AA6xxx series alloy according to the Aluminium Association Standard.

In one embodiment, the metallic first layer may be made of an alpha Ti based material, a near alpha Ti based material or an alpha-beta Ti based material.

In one embodiment, the metallic first layer may be made of commercially pure Sn, Sn-Cu or Sn-Sb.

In another embodiment of the water barrier, the metallic first layer may be lead-free.

In another embodiment of the water barrier, the polymer adhesive of the second layer may comprise at least one polymer selected from the group comprising a low density polyethylene (LDPE), a linear low density polyethylene (LLDPE), a medium density polyethylene (MDPE), a high density polyethylene (HDPE) and a copolymer of ethylene with one or more polar monomers such as acrylic acid, methacrylic acid, glycidyl methacrylate, maleic acid, or maleic anhydride.

In another embodiment of the water barrier, the metallic third layer may be made of any metal/metal alloy at any thickness known to be suited for use in water barriers in power cables by the skilled person. In one example embodiment, the metallic third layer is a Cu/Cu-alloy such as for example pure Cu, a CuNi-alloy or a CuNiSi-alloy, or a Fe/Fe-alloy, such for example stainless alloy SS316 or S32750, or an Al/Al-alloy such as for example an AA1xxx series, an AA5xxx series or an AA6xxx series alloy according to the Aluminium Association Standard

In one embodiment, the metallic third layer may be made of an alpha Ti based material, a near alpha Ti based material or an alpha-beta Ti based material.

In one embodiment, the metallic third layer may be made of commercially pure Sn, Sn-Cu or Sn-Sb.

In another embodiment of the water barrier, the metallic third layer may be lead-free.

In another embodiment of the water barrier, the water barrier may comprise
- a fourth layer made of an adhesive polymer material
- a metallic fifth layer;
wherein the second, third and fourth layers each have at least one aperture, the apertures of the second, third and fourth layer being co-located with each other;
and wherein the fourth layer glues and seals the third layer to the fifth layer.

In another embodiment of the water barrier, the polymer adhesive of the fourth layer may comprise at least one polymer selected from the group comprising a low density polyethylene (LDPE), a linear low density polyethylene (LLDPE), a medium density polyethylene (MDPE), a high density polyethylene (HDPE) and a copolymer of ethylene with one or more polar monomers such as acrylic acid, methacrylic acid, glycidyl methacrylate, maleic acid, or maleic anhydride.

In another embodiment of the water barrier, the metallic fifth layer may be made of made of any metal/metal alloy at any thickness known to be suited for use in water barriers in power cables by the skilled person. In one example embodiment, the metallic fifth layer is a Cu/Cu-alloy such as for example pure Cu, a CuNi-alloy or a CuNiSi-alloy, or a Fe/Fe-alloy, such for example stainless alloy SS316 or S32750, or an Al/Al-alloy such as for example an AA1xxx series, an AA5xxx series or an AA6xxx series alloy according to the Aluminium Association Standard.

In one embodiment, the metallic fifth layer may be made of an alpha Ti based material, a near alpha Ti based material or an alpha-beta Ti based material.

In one embodiment, the metallic fifth layer may be made of commercially pure Sn, Sn-Cu or Sn-Sb.

In another embodiment of the water barrier, the metallic fifth layer may be lead-free.

In a fourth aspect, the invention relates to a high voltage cable, comprising the water barrier (160) according to the third aspect of the invention or obtainable through the method of any one embodiment of the method according to the second aspect of the invention.

### Short description of the drawings

In the following description this invention will be further explained by way of exemplary embodiments shown in the drawings:
Fig. 1 is a top view of the laminate tape according to the fist aspect of the invention
Fig. 2 is a side view of a metallic tape 130 wrapping around a cable 120.
Fig. 3 is a side view of a first embodiment of the laminate tape 140 wrapping around a metallic tape 130.
Fig. 4 is a side view of second embodiment of the laminate tape 140 wrapping around the metallic tape 130.
Fig. 5 is a side view of a second metallic tape 150 wrapping around the embodiment of the laminate tape 140.
Fig. 6 is a side view of a second metallic tape 150 wrapping around the second embodiment of the laminate tape 140.
Fig. 7 is a cross section of the cable 100 covered by the water barrier 160 and the polymer sheath 170.
Fig. 8 is a cross section of the cable 100 covered by the water barrier 260 comprising an optional third layer.

### Detailed description of the invention

Alternative water barriers to current lead-based water barriers that are fully impervious to water are desirable. The current invention provides a laminate structure of metal and polymer that can be used as a water barrier and that is waterproof.

Here the person skilled in the art will understand that the terms waterproof and fully impervious to water are synonyms

A typical high voltage cable 100 where a water barrier may be desired comprises an electric conductor 110 and an insulation system 120, surrounding the electric conductor 110. The insulation system 120 comprising an inner semiconducting layer 121, an insulating layer 122 and an outer semiconducting layer 123.

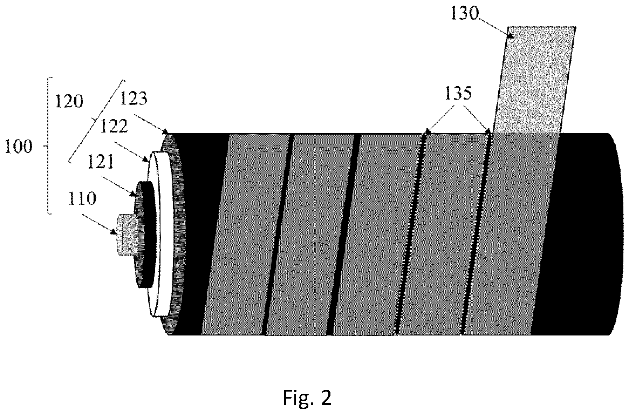

As shown on fig. 2, a metallic tape 130 is helically wound around the insulation system 120. Typically, this metallic tape 130 may be a copper tape, preferably made of pure Cu or a CuNiSi-alloy, a titan tape, preferably made of pure Ti or a Ti-alloy or a tin tape, preferably made of commercially pure Sn or a Sn-alloy. Here the tape is intended to be wound so that two consecutives turns of the tape 130 will be adjacent to each other without gap in between, however a small gap between two adjacent tape turns is to be expected during production. However, this gap should not exceed 50% of the width of the tape 130.

A laminate tape 140 is then wrapped helically around the cable, on top of the metallic tape 130. The laminate tape 140 comprises a metallic layer 142, and a polymer adhesive layer 141;143 on one or both sides of the metallic layer 142

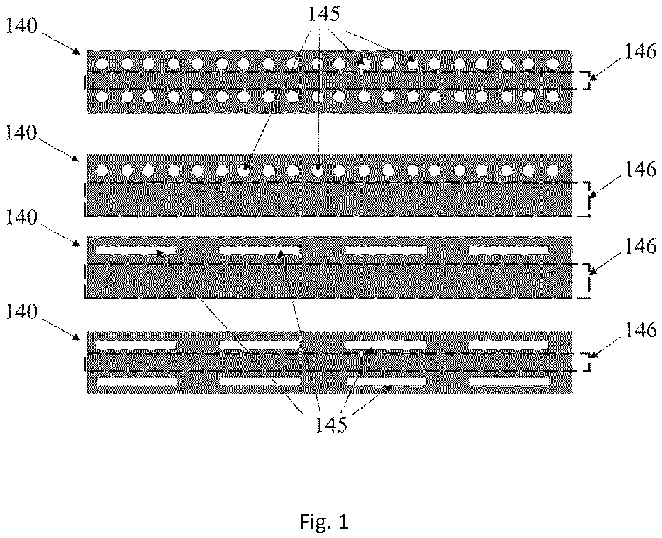

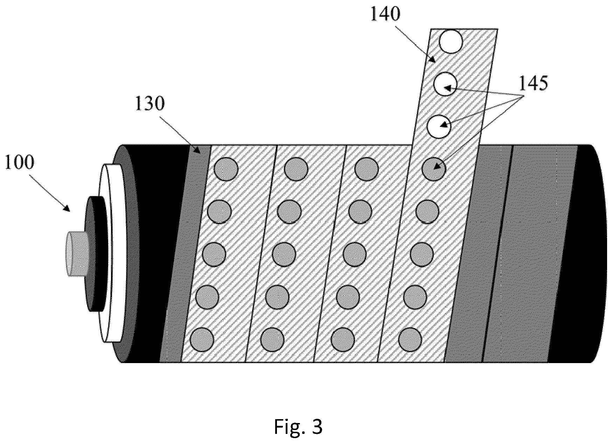

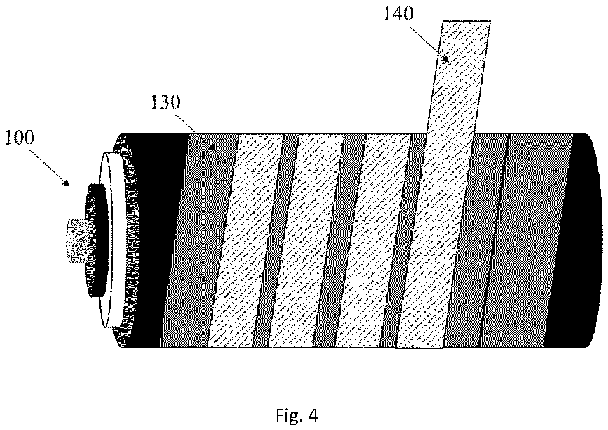

It is important in this step that:
- the potential gap between two turns of metallic tape 130 is covered by the laminate tape 140; one way to achieve this is when the laminate tape comprises a continuous and straight band 146 without apertures, the band extending in the longitudinal direction of the tape, as illustrated in fig. 1;
- some surface of the metallic tape 130 is left uncovered by the laminate tape 140. This can be achieved by using a laminate tape 140 comprising a plurality of apertures 145 and/or by intentionally leaving a gap between two turns of the laminate tape 140, as illustrated in fig. 3 and fig. 4 respectively.

The polymeric adhesive in the polymer adhesive layer(s) 141 and 143 may be a polyethylene terephthalate-based, a polyurethane-based or polyethylene-based adhesive, or similar. Polyethylene-based adhesive have been found surprisingly effective with regards to improving the waterproofing properties of the water barrier 160.

The metallic layer 142 is typically made of copper, preferably pure Cu or a CuNiSi-alloy. Alternatively, it is made of titan, preferably pure Ti or a Ti-alloy or of tin, preferably commercially pure Sn or a Sn-alloy.

Titanium is a strong and light metal and is thus particular suitable for use in dynamic power cables.

It is well known that titanium and its alloys have different properties, wherein the alpha based alloys are less affected by heat treatment and microstructural variations followed by a welding operation compared to beta-phase based titanium and titanium alloys.

Thus, the titanium and titanium alloy for use in the metallic layer 142 are selected from alpha titanium-based materials, alpha titanium-based alloys, near alpha titanium-based alloys and alpha - beta titanium-based alloys.

The above-mentioned titanium and titanium alloys exhibit negligible corrosion rate in seawater and other natural waters and its corrosion resistance is superior over steel and copper metal/alloys.

Table 1 to 4 below depicts further details and embodiments of the metallic layer 142 material.

**Table 1**

| Pure titanium | Grades 1 to 4 |
|---|---|
| Ti [wt%] | >= 99 |
| ^{∗}Incidental elements and impurities [wt%] | 0 - 1 |

wherein the amount of oxygen and iron does not exceed 0.5 [wt%] each.

**Table 2**

| Alpha alloys | Alloy 2 | Alloy 3 |
|---|---|---|
| Ti [wt%] | 95 - 98 | 89 - 94 |
| Cu [wt%] | 2 - 4 | |
| Al [wt%] | | 4-6 |
| Sn [wt%] | | 2 - 4 |
| ^{∗}Incidental elements and impurities [wt%] | 0 - 1 | 0 - 1 |

wherein the amount of oxygen and iron does not exceed 0.5 [wt%] each.

**Table 3**

| Near alpha alloys | Alloy 1 | Alloy 2 | Alloy 3 | Alloy 4 | Alloy 5 | Alloy 6 |
|---|---|---|---|---|---|---|
| Ti [wt%] | 87 - 91 | 86 - 92.5 | 89 - 91.9 | 82 - 89 | 83 - 88.9 | 80.5 - 87.5 |
| Al [wt%] | 7-9 | 5 - 7 | 3 - 5 | 5 - 7 | 3 -5 | 5 - 7 |
| Mo [wt%] | 0.5 - 2 | 0.4 - 2 | 3 - 5 | 1 - 3 | 3 - 5 | 0.1 - 1 |
| V [wt%] | 0.5 - 2 | | | | | |
| Nb [wt%] | | 1 - 3 | | | | 0.3 - 1 |
| Ta [wt%] | | 0.1 - 2 | | | | |
| Sn [wt%] | | | 1 - 3 | 1 - 3 | | 3 - 5 |
| Zr [wt%] | | | | 3 - 5 | 4 - 6 | 3 - 5 |
| Si [wt%] | | | 0.1 - 2 | | 0.1 - 1 | 0.1 -0.5 |
| Cu [wt%] | | | | | 0.4 - 2 | |
| Incidental elements and impurities [wt%] | 0-1 | 0-1 | 0-1 | 0-1 | 0-1 | 0-1 |

**Table 4**

| Alpha-beta alloy | Alloy 1 |
|---|---|
| Ti [wt%] | 87 - 92 |
| Al [wt%] | 5 - 7 |
| V [wt%] | 3 - 5 |
| Incidental elements and impurities [wt%] | 0 - 1 |

It is noted that any percentage amount of a metal component in an alloy described herein is provided as a fraction of the weight of the metal per total weight of the alloy as a percentage, or [wt%].

It will be appreciated by a skilled person that, for titanium and titanium alloy as exemplified in table 1 to 4, where a range of a percentage amount of a metal in an alloy is given, the amount of metal in that alloy may vary within that range, provided the total amount of all metals in that alloy adds up to a total of 100 wt%.It will also be appreciated that some metals and alloys may inevitably have very small quantities of impurities within them. These impurities may be present since they are typically either too difficult or costly to remove when the metal or alloy is being produced. These impurities may be present in the range from 0.0001%, 0.001%, 0.005% or 0.01% to 0.1%, 0.5%, 1% (wt) based on the total weight of the alloy and wherein each impurity does not exceed 0.5% by weight based on the total weight of the alloy. It will be appreciated such impurities may be present in the metals and alloys of the present invention without affecting or departing from the scope of the invention and comprises the following substances iron, nitrogen, carbon, oxygen and hydrogen.

Titanium exists in two crystallographic forms. At room temperature, unalloyed commercially pure titanium has a hexagonal close-packed (hcp) crystal structure referred to as alpha (α) phase. When the temperature of pure titanium reaches 885 °C (called the β transus temperature of titanium), the crystal structure changes to a bcc structure known as beta (β) phase. Alloying elements either raise or lower the temperature for the α-to- β transformation, so alloying elements in titanium are classified as either α stabilizers or β stabilizers. For example, vanadium, niobium, chromium, manganese and molybdenum decrease the α-to-β transformation temperature and promote the formation of the β phase, while elements such as oxygen, nitrogen and aluminium are stabilizers of the α-phase.

Pure Ti material grade 1 to 4 is considered an alpha alloy because that alpha-phase is the only phase present. The material has a minimum of 99% (wt) titanium and incidental elements and impurities of Fe, C, N, O and H that are interstitial solutes in the alpha phase, wherein the content of Fe and O may not exceed 0.5% (wt) each.

Common alpha Ti alloys comprise one or more of Cu, Al or Sn which are stabilizers of the alpha phase, cf. table 2.

The near Ti alpha alloys and alpha-beta Ti alloys comprises alloy elements that support both an alpha phase and a beta phase.

A near alpha Ti alloy is an alloy that comprises both alpha and beta phase stabilizer, cf. table 3 above, but wherein the amount of alloy elements that stabilizes the alpha phase is higher compared to the amount of alloy elements that stabilizes the beta phase.

An alpha-beta alloy is an alloy that comprises both alpha and beta phase stabilizer, cf. table 3 above, but wherein the amount of alloy elements that stabilizes the alpha phase is higher compared to the amount of alloy elements that stabilizes the beta phase, but wherein the amount of alloy elements that stabilizes the beta phase is higher compared to the amount of beta phase stabilizing elements of the near alpha alloys, cf. table 4.

Further the metallic layer 142 may be the ASTM grade 1 Pure Ti material with an alpha phase.

The metallic layer 142 may be the ASTM grade 2 Pure Ti material with an alpha phase.

The metallic layer 142 may be the ASTM grade 3 Pure Ti material with an alpha phase.

The metallic layer 142 may be the ASTM grade 4 Pure Ti material with an alpha phase.

The metallic layer 142 may be the alpha alloy Ti-2.5Cu.

The metallic layer 142 may be the alpha alloy Ti-5Al-2.5Sn.

The metallic layer 142 may be the near-alpha alloy Ti-8Al-1Mo-1V.

The metallic layer 142 may be the near-alpha alloy Ti-6Al-0.8Mo-2Nb-1Ta.

The metallic layer 142 may be the near-alpha alloy IMI550 (Ti-4Al-4Mo-2Sn-0.5Si).

The metallic layer 142 may be the near-alpha alloy Ti-6Al-2Mo-4Zr-2Sn.

The metallic layer 142 may be the near-alpha alloy IMI700 (Ti-6Al-4Mo-5Zr-1.25Cu-0.25Si).

The metallic layer 142 may be the near-alpha alloy IMI834 (Ti-6Al- 4Sn-4Zr-0.7Nb-0.5Mo- 0.3Si)

The metallic layer 142 may be the alpha-beta alloy Ti-6A1-4V.

Similar to lead, tin is a soft, malleable and highly ductile metal with a relatively low melting temperature of around 232°C.

It is well known that tin and its alloys can have different crystal structures, wherein the alpha- tin crystal structure has a face-centred diamond-cubic structure and beta-tin has a body-centred tetragonal crystal structure. In cold conditions beta-tin can transform spontaneously into alpha-tin, a phenomenon known as "tin pest" or "tin disease". Commercially pure grades of tin with a tin content of at least 99.5% resists transformation because of the inhibitory effect of small amounts of bismuth, antimony, lead and silver present as incidental elements and impurities. Alloying element such as copper (Cu) and antimony (Sb) also increase the hardness of tin (Sn). Thus, the tin and tin-alloys for use in a metallic layer 142 are selected from commercially pure tin, a Sn-Cu alloy or a Sn-Sb alloy. Tables 5 and 6 below depict further details and embodiments of the metallic layer 142 materials.

**Table 5**

| Commercially pure tin | |
|---|---|
| Sn [wt%] | >= 99.5 |
| Incidental elements and impurities [wt%] | 0 - 0.5 |

**Table 6**

| | Alloy 1 | Alloy 2 |
|---|---|---|
| Sn [wt%] | 97 - 99.5 | 93 - 96 |
| Cu [wt%] | 0.5 - 2 | |
| Sb [wt%] | | 4 - 6 |
| Incidental elements and impurities [wt%] | 0 - 1 | 0 - 1 |

It is noted that any percentage amount of a metal component in an alloy described herein is provided as a fraction of the weight of the metal per total weight of the alloy as a percentage, or [wt%].

It will be appreciated by a skilled person that, for tin and tin alloy as exemplified in tables 5 and 6, where a range of a percentage amount of a metal in an alloy is given, the amount of metal in that alloy may vary within that range, provided the total amount of all metals in that alloy adds up to a total of 100 wt%. It will also be appreciated that some metals and alloys may inevitably have very small quantities of impurities within them. These incidental elements and impurities may be present since they are typically either too difficult or costly to remove when the metal or alloy is being produced. These impurities may be present in the range from 0.0001%, 0.001%, 0.005% or 0.01% to 0.1%, 0.5%, 1% (wt) based on the total weight of the alloy and wherein each impurity does not exceed 0.5% by weight based on the total weight of the alloy. It will be appreciated such impurities may be present in the metals and alloys of the present invention without affecting or departing from the scope of the invention and comprises the following substances bismuth, antimony, lead and silver.

The metallic layer 142 may be commercially pure Sn.

The metallic layer 142 may be a Sn-0.7Cu alloy.

The metallic layer 142 may be a Sn-5Sb alloy.

The plurality of apertures 145 may be holes or slits, of any shape and size, for example circular, triangular, rectangular, oval... as shown in fig 1.

It is important that when the laminate tape 140 comprises a plurality of apertures, it also comprises a continuous band without aperture in the longitudinal direction, so that the laminate tape 140 may cover any gap between to turns of the metallic tape 130, as shown in fig 1.

By leaving some uncovered tape 130, the radial conductivity may be guaranteed over the water barrier. Radial conductivity is important in order to dissipate the charging currents arising during cable operation in metallic components/layers.

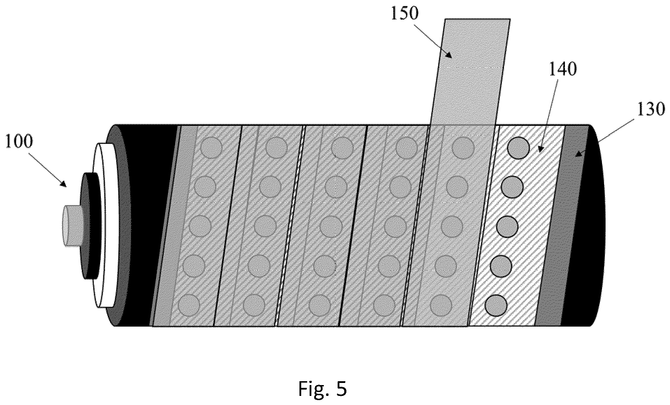

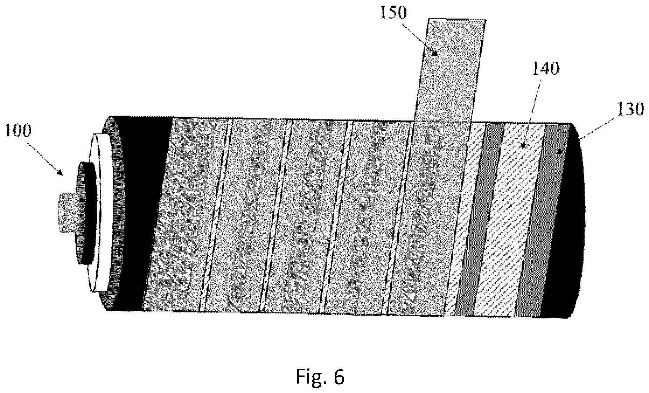

Another metallic tape 150, can be optionally winded helically around the two previously wrapped layers, as illustrated in fig. 5 and 6. Typically, this metallic tape 150 may be a copper tape. Alternatively, this metallic tape 150 could be made of titan or tin, the metals can be selected from the specific examples of metals provided herein. Preferably this metallic tape 150 is made of the same metal as the metallic layer 142 and as the metallic tape 130. In this case, the laminate tape 140 will be sandwiched in between two metallic tapes 130;150 improving the conductivity and the waterproof properties of the water barrier 160 by increasing the length of the water permeation pathway.

The formed water barrier260 comprises:
- a metallic first layer 230;
- an adhesive polymer second layer 241;
- a metallic third layer 242;
- an optional adhesive polymer fourth layer 243; and
- an optional metallic fifth layer 250.

These layers may be assembled as described above. In this case the metallic first layer 230 is made of the first metallic tape 130. The second, third and optional fourth layers 241;242;243 are made of the laminate tape 240 and the optional fifth layer 250 is made of the metallic tape 150. To complete the preparation of the water barrier 160;260, heating must be applied at a temperature over the melting temperature of the adhesive polymer layer 141,143; 241,243. This heating step can be realised as a separate step or during the extrusion of a polymer sheath 170 (not shown); 270. The heating step glues and seals the various metal tapes 130, 140, 150 together.

The obtained water barrier 160; 260 is therefore waterproof/fully impervious to water, and at the same time radially and longitudinally conductive.

A polymer sheath 170 (not shown); 270 may then be extruded on top of the water barrier 160; 260 and, as mentioned above, the heat provided by the extrusion may melt the polymer adhesive layer 141,143; 241,243. This can replace or come in addition to the heating step mentioned above.

Finally, the polymer sheath 170; 270 may be directly cooled in a water bath.

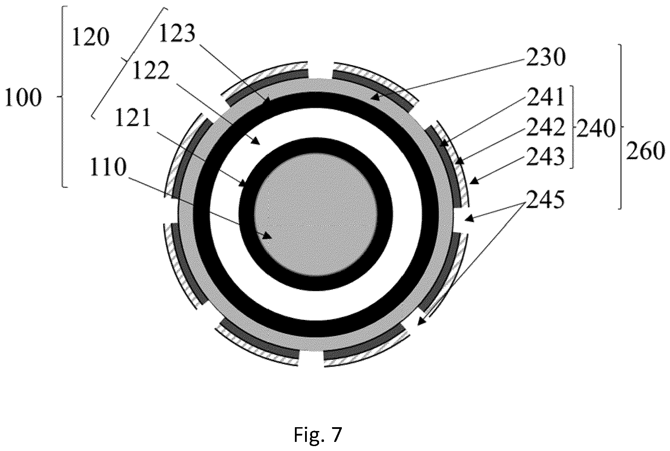

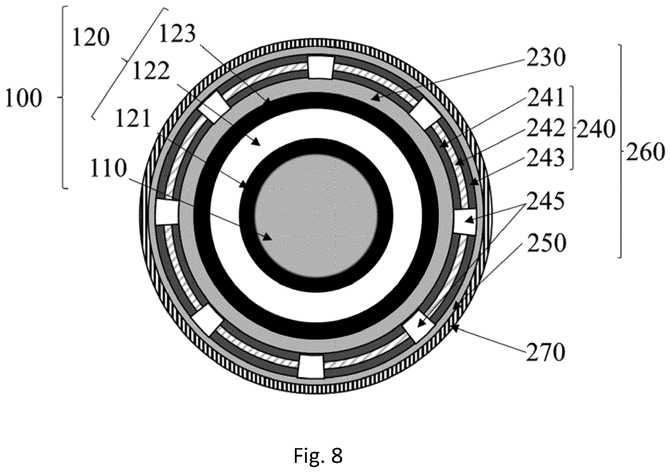

A cross section of an example obtained assembly of the water barrier 260 is shown on figure 7. A cross section of an example obtained assembly of the water barrier 260 comprising the optional third layer, and the optional polymer sheath 270 around the cable 100 is shown on figure 8. As a note, even though the apertures 245 have been illustrated as empty in figure 8, after the heating step, the metallic first layer 230 will be in contact with the optional metallic fifth layer 250 or the optional polymer sheath 270 when one of these layer is present.

## Claims

1. A laminate tape (140) for use in the production of water barriers, comprising
- a first layer (141) made of an adhesive polymer material, and
- a metallic second layer (142)
wherein the tape comprises a plurality of apertures (145).

2. A laminate tape (140) according to claim 1, wherein the laminate tape (140) comprises a continuous and straight band (146) without apertures (145), the band extending in the longitudinal direction of the tape.

3. A laminate tape (140) according to claim 1 or 2, wherein the apertures (145) are holes or slits.

4. A laminate tape (140) according to any one of claim 1 to 3, wherein the laminate tape (140) comprises a third layer (143) made of an adhesive polymer material on the side of the metallic second layer (142) opposite to the first layer (141) made of an adhesive polymer material.

5. A laminate tape (140) according to any one of claim 1 to 4, wherein the polymer adhesive of the first and/or third layer (141; 143) is polyethylene.

6. A laminate tape (140) according to any one of claim 1 to 5, wherein the metallic second layer is copper.

7. A method of applying a water barrier to a high voltage cable (100), comprising the steps of
a) providing a high voltage cable (100), comprising a conductor (110) and an insulation system (120);
b) helically wrapping a first metallic tape (130) around the cable (100) forming a first barrier layer with an outer surface, so that the first metallic tape (130) substantially covers the outer surface of the cable (100) and forms a helical tape transition section (135);
c) helically wrapping a laminate tape (140) around the first barrier layer forming an assembly, the laminate tape (140) comprising:
- a first layer made of a polymer adhesive (141), and
- a metallic second layer (142);
wherein the layer made of a polymer adhesive (141) is in contact with the outer surface of the first barrier layer,
wherein the laminate tape (140) fully covers the helical tape transition section (135) and leaves parts of the outer surface of the first barrier layer uncovered by the laminate tape (140);
d) heating the outer surfaces of the assembly obtained in step c) at a temperature over the melting temperature of the polymer adhesive layer (141), so that the polymer adhesive melts.

8. A method according to claim 7, wherein the pitch of the helix formed by the laminate tape (140) is greater than the width of the laminate tape (140).

9. A method according to claim 7 or 8, wherein the laminate tape (140) comprises a plurality of apertures (145).

10. A method according to any one of claims 7 to 9, wherein the heating step d) is performed before or through the following step of:
e) extruding a polyethylene sheath (170) around the assembly at a temperature sufficient over the melting temperature of the polymer adhesive layer (141), so that the polymer adhesive melts.

11. A method according to claim 10, further comprising the step of
f) cooling the cable obtained in step d) or e) in a water bath.

12. A method according to any one of claims 7 to 11, wherein the method further comprises a step between steps c) and d) of wrapping a second metallic tape (150) around the cable of step c) so that the second metallic tape (150) substantially covers the surface of the assembly of step c).

13. A method according to claim 12, wherein the laminate tape (140) comprises a third layer (143) made of an adhesive polymer material on the side of the metallic second layer (142) opposite to the a first layer (141) made of an adhesive polymer material.

14. A water barrier (260) comprising:
- an inner metallic first layer (230)
- a second layer made of an adhesive polymer material (241)
- an metallic third layer (242)
wherein the second and third layers (241, 242) each have at least one aperture, the apertures of the second and third layer being co-located with each other;
and wherein the second layer (241) glues and seals the first layer (230) to the third layer (242); and
wherein the water barrier (260) forms a continuous barrier.

15. A high voltage cable, comprising the water barrier (160) obtainable through the method according to any one of claims 7 to 13 or the water barrier (260) according to claim 14.
